# EUROPÄISCHE PATENTSCHRIFT

(11) **EP 3 272 498 B1**
(45) Veröffentlichungstag und Bekanntmachung des Hinweises auf die Patenterteilung: **21.05.2025**
(21) Anmeldenummer: 17186871.4
(22) Anmeldetag: 05.09.2014
(51) Int. Cl.: B29C 49/62, B29C 33/10, B29C 49/06, B29C 49/08, B29C 49/48, B29L 31/00, B29K 105/00

(54) **BLASFORM, BLASFORMMASCHINE UND VERFAHREN ZUR UMFORMUNG VON KUNSTSTOFFVORFORMLINGEN ZU KUNSTSTOFFBEHÄLTNISSEN MIT LUFTABFÜHRUNG**
BLOW MOULD, BLOW MOULDING MACHINE AND METHOD FOR FORMING PLASTIC PREFORMS INTO PLASTIC CONTAINERS WITH AIR REMOVAL
MOULE DE SOUFFLAGE, MACHINE DE FORMAGE PAR SOUFFLAGE ET PROCÉDÉ DE TRANSFORMATION DE DE PRÉFORMES EN MATIÈRE PLASTIQUE EN RÉCIPIENTS EN MATIÈRE PLASTIQUE DOTÉS D'UNE ÉVACUATION D'AIR

(30) Priorität: 05.09.2013 DE 102013109716
(43) Veröffentlichungstag der Anmeldung: 24.01.2018
(62) Teilanmeldung aus: 14183704.7
(73) Patentinhaber: Krones AG, 93073 Neutraubling (DE)
(72) Erfinder: Dachs, Alexander, 93073 Neutraubling (DE); Hüttner, Gerald, 93073 Neutraubling (DE); Deyerl, Heinrich, 93073 Neutraubling (DE); Forsthoevel, Jochen, 93073 Neutraubling (DE); Grassl, Peter, 93073 Neutraubling (DE); Lappe, Ulrich, 93073 Neutraubling (DE)
(74) Vertreter: Hannke Bittner & Partner mbB Regensburg

(56) Entgegenhaltungen:
- WO-A1-94/26498
- US-A- 4 865 206
- US-A- 5 217 729
- US-A- 5 804 127
- US-A1- 2004 202 746
- US-B1- 6 863 856

## Beschreibung

Die vorliegende Erfindung bezieht sich auf eine Blasform, eine Blasformmaschine und ein Verfahren zum Umformen von Kunststoffvorformlingen zu Kunststoffbehältnissen. Derartige Verfahren und Vorrichtungen sind aus dem Stand der Technik seit langem bekannt. Dabei werden üblicherweise erwärmte Kunststoffvorformlinge in eine Blasform eingebracht, welche einen Hohlraum ausbildet, der zur Expansion der Kunststoffvorformlinge zu den Kunststoffbehältnissen dient. Innerhalb dieses Hohlraums werden die Kunststoffvorformlinge üblicherweise mit Blasluft gegen eine Innenwandung dieser Blasformteile beaufschlagt. Diese Innenwandung weist dabei die Kontur des herzustellenden Kunststoffbehältnisses auf.

Bei derartigen Blasvorgängen und insbesondere Streckblasvorgängen wird der Energiebedarf der Anwendung unter anderem wesentlich von dem sogenannten Fertigblasdruck bestimmt. Dies ist derjenige Druck, mit dem der Kunststoffvorformling vollends zu dem gewünschten Behältnis ausgeformt wird. Daher ist es erstrebenswert, einen möglichst geringen Fertigblasdruck zu verwenden. Begrenzend erweist sich hierbei in der Regel die Ausprägung der letzten Ecken, insbesondere in den Füßchen einer Bodentasse. Um hier ein Abfließen der verdrängten Luft aus der Blasform, insbesondere während des Aufblasens der Behältnisse zu gewährleisten, sind bereits nach dem internen Stand der Technik der Anmelderin Blasformen zum Teil mit Entlüftungsöffnungen versehen. Dabei werden nach diesem Stand der Technik in der Regel in jedem Fußeck eines Bodens Bohrungen gesetzt und teilweise in einer Flanke zu einem Hauptdurchmesser eine weitere. Diese Öffnungen bzw. Bohrungen begrenzen jedoch den abfließenden Volumenstrom derart, dass ein niedrigst möglicher Blasdruck verhindert wird.

Das Dokument US 4 865 206 A offenbart ein Blasform zum Herstellen von Kunststoffbehältnissen mit wenigstens zwei Blasformteilen, welche einen Hohlraum ausbilden, innerhalb dessen Kunststoffvorformlinge durch Beaufschlagung mit einem fließfähigen Medium zu den Kunststoffbehältnisse umformbar sind, wobei eine den Hohlraum begrenzende Innenwandung der Blasformteile eine Kontur aufweist, welche eine vorgegebene Gestalt der herzustellenden Behältnisse erzeugt, wobei wenigstens ein Abschnitt eines Blasformteils einen Boden des Kunststoffbehältnisses erzeugt, wobei in einem Abschnitt eines Blasformteils wenigstens ein Öffnungsbereich vorgesehen ist, welcher ein Abführen eines gasförmigen Mediums während eines Expansionsvorgangs des Behältnisses ermöglicht wobei dieser Öffnungsbereich sich wenigstens abschnittsweise entlang einer ersten Linie sowie einer zweiten Linie erstreckt, wobei diese Linien wenigstens abschnittsweise in einem von 0° unterschiedlichen Winkel zueinander verlaufen.

Auf der anderen Seite ist man jedoch auch in der Wahl der jeweiligen Öffnungen in der Blasform begrenzt. Würde eine derartige Öffnung zu groß gewählt werden, könnte im Ergebnis ein Teil des Kunststoffes des Behältnisses in diese Öffnung hineingedrückt werden, was dann auch auf dem entstehenden Behältnis sichtbar oder zumindest leicht spürbar ist.

Der vorliegenden Erfindung liegt daher die Aufgabe zugrunde, eine ausreichende Entlüftung während des Blasvorgangs zu gewährleisten, ohne dass dabei jedoch das optische Erscheinungsbild der hergestellten Behältnisse beeinträchtigt wird. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Blasform zum Herstellen von Kunststoffbehältnissen gemäß Anspruch 1 weist wenigstens zwei Blasformteile auf, welche einen Hohlraum ausbilden, innerhalb dessen Kunststoffvorformlinge durch Beaufschlagung mit einem fließfähigen Medium zu den Kunststoffbehältnissen umformbar sind. Dabei weist eine diesen Hohlraum begrenzende Innenwandung der Blasformteile eine Kontur auf, welche eine vorgegebene Gestalt der herzustellenden Behältnisse erzeugt. Weiterhin erzeugt wenigstens ein Abschnitt eines Blasformteils einen Boden des Kunststoffbehältnisses, wobei in einem Abschnitt des Blasformteils wenigstens ein Öffnungsbereich vorgesehen ist, welcher ein Abführen eines gasförmigen Mediums während eines Expansionsvorgangs des Behältnisses ermöglicht.

Erfindungsgemäß erstreckt sich dieser Öffnungsbereich wenigstens abschnittsweise entlang einer ersten Linie sowie entlang einer zweiten Linie, wobei diese Linien wenigstens abschnittsweise in einem von 0° unterschiedlichen Winkel zueinander verlaufen.

Im Gegensatz zum Stand der Technik, in dem lediglich einzelne Bohrungen bzw. wenige Bohrungen vorgesehen sind, wird hier vorgeschlagen, die Öffnung einerseits derart zu gestalten, dass diese einen größeren Strömungsquerschnitt erlaubt, andererseits jedoch nicht so groß, dass Teile des Kunststoffbehältnisses in diese Öffnungsbereiche hineingedrückt werden können.

Durch die Ausführung der Öffnungsbereiche in wenigstens zwei Linien, die sich in unterschiedliche Richtungen erstrecken, kann dieses Ziel erreicht werden, da einerseits der Strömungsquerschnitt, wie in Experimenten ermittelt werden konnte, hinreichend vergrößert wird und andererseits die Öffnungsbereiche bzw. die einzelnen Öffnungen noch so klein gehalten werden können, dass die Kunststoffbehältnisse nicht in diese hineingedrückt werden. Die Anordnung in wenigstens zwei nicht zueinander parallel liegenden Linien bietet die Möglichkeit einer günstigen Einflussnahme auf die Entwicklung insbesondere der Standfüße durch die Entlüftung. Es wäre auch denkbar, eine Vielzahl von Öffnungen, etwa in vorgegebenen Flächenabschnitten anzuordnen. Vorteilhaft weist wenigstens eine Linie eine Länge auf, die größer ist als 0,5cm, bevorzugt größer als 1cm. Bevorzugt weist jede der Linien eine Länge von mehr als 0,5cm auf. Falls beispielsweise der Öffnungsbereich als Schlitz ausgeführt ist, ergibt sich die Linienverlauf direkt aus dem Verlauf dieses Schlitzes. Falls der Öffnungsbereich eine Vielzahl von Öffnungen aufweist, handelt es sich bei der Linie um eine geometrische Verbindungslinie, welche diese Öffnungen miteinander verbindet.

Vorteilhaft sind die besagten Linien in der Bodenkontur der Blasform ausgebildet. Dabei ist es möglich, dass diese geometrischen Linien einen Schnittpunkt aufweisen, es können jedoch auch mehrere Linien vorgesehen sein, welche sich nicht schneiden oder berühren. Denkbar wären auch zwei oder mehrere zueinander parallele Linien. Die Anmelderin behält sich vor, auch hierfür Schutz zu beanspruchen.

Vorteilhaft ist ein Gabelungspunkt vorgesehen, in dem sich eine Linie beispielsweise in zwei aufspaltet. So ist es möglich, dass die zweite Linie von dieser ersten Linie abzweigt.

Ein Entlüftungsvolumen wird hier angenommen als das Volumen eines gesamten zu entlüftenden Bereich eines Füßchens des herzustellenden Behältnisses.

Nicht erfindungsgemäß ist, dass die Offnung als durchgehender und/oder unterbrochener Spalt ausgeführt wird, die Linie kann jedoch auch durch eine Vielzahl von nebeneinander liegenden Öffnungen definiert sein. Dies wird unten unter Bezugnahme auf die Figuren genauer erläutert.

Erfindungsgemäß ist der Offnungsbereich in einem Bereich eines Bodenteils der Blasform angeordnet der zur Erzeugung eines Standfußes des Behältnisses dient. Aus dem Stand der Technik bekannte Petaloidböden weisen üblicherweise eine Vielzahl, beispielsweise fünf oder sechs, derartige Füßchen auf, die, wie oben erwähnt, in der Herstellung besonders schwierig sind, da hier die entstehende Druckluft zum Teil eine vollständige Expansion verhindert. In diesen Bereichen der Blasform, welche zur Ausprägung dieser Füßchen dienen, sind die erwähnten Öffnungsbereiche angeordnet.

Erfindungsgemäß ist in dem Offnungsbereich eine Vielzahl von Löchern angeordnet, wobei diese Löcher entlang wenigstens einer der beiden Linien angeordnet sind.

Vorteilhaft sind mehrere Öffnungsbereiche entlang der Linien miteinander über Kanäle verbunden.

Bei einer weiteren vorteilhaften Ausführungsform weist wenigstens eine Bohrung einen Durchmesser bzw. eine Breite auf, die zwischen 0,5 mm und 4 mm, bevorzugt zwischen 0,5 mm und 2 mm und besonders bevorzugt bei ca. 1 mm liegt. Es konnte ermittelt werden, dass derartige Durchmesser auf der einen Seite einen hinreichenden Strömungsquerschnitt ermöglichen, auf der anderen Seite jedoch wirksam ein Eindringen von Kunststoffmaterial während des Expansionsvorgangs verhindern.

Daneben wäre es auch denkbar, dass in bestimmten Bereichen des Bodenteils poröse Materialien eingesetzt werden, welche eine Vielzahl von kleinen Öffnungen zur Verfügung stellen, durch welche das gasförmige Medium austreten kann.

Durch die hier beschriebenen Vorgehensweisen kann insgesamt ein Fertigblasdruck der Behältnisse um bis zu 5 bar gesenkt werden und auf diese Weise können die Energiekosten der Maschinen gesenkt werden sowie auch die nötige Kompressorgröße und damit auch die Kosten. Daneben ist in einzelnen Fällen auch eine Vereinfachung der Maschinentechnik möglich, wobei beispielsweise ein Luftrecycling wegfallen kann. Daneben wird auch die Belastung der einzelnen Bauteile entsprechender Blasstationen reduziert.

Bei einer weiteren vorteilhaften Ausführungsform ist ein Abstand zwischen zwei entlang der Linien nebeneinander angeordneten Löchern kleiner als 4 mm, bevorzugt kleiner als 3 mm und bevorzugt kleiner als 2 mm. Vorteilhaft sind entlang jeder Linie wenigstens drei, bevorzugt wenigstens vier und bevorzugt wenigstens fünf Öffnungen angeordnet. Damit werden die Linien auch durch die Lage dieser Öffnungen bestimmt.

Bei einer weiteren vorteilhaften Ausführungsform schließen sich an diese Öffnungsbereiche innerhalb einer Wandung der Blasformteile Kanäle an, welche zur Abführung des gasförmigen Mediums dienen. Dabei wäre es möglich, dass die Strömungswege aus mehreren, beispielsweise kreisförmigen Löchern, in mehreren Kanälen zusammengefasst werden.

Vorteilhaft erstrecken sich diese Kanäle wenigstens teilweise durch die Wandung des Bodenteils hindurch. Bevorzugt stellen die Kanäle eine Strömungsverbindung zwischen einer Außenwand des Bodenteils und einer Innenwand des Bodenteils her und damit auch zwischen einem Innenraum der Blasform und einem Außenraum der Blasform.

Bei einer weiteren vorteilhaften Ausführungsform erstrecken sich die Kanäle wenigstens abschnittsweise entlang einer zu der Kontur (der den Hohlraum begrenzenden Innenwandung des Blasformteils) gebildeten Flächennormalen. Auf diese Weise ist es möglich, im Rahmen des Blasformprozesses die Luft sehr effizient bzw. schnell abzuführen. Dabei wäre es möglich, dass beispielsweise Entlüftungsbohrungen mit einer großen Anbohrung und einer vergleichsweise kurzen Drossellänge (bevorzugt kleiner als 4 mm, bevorzugt kleiner als 3 mm, bevorzugt kleiner als 2 mm) vorgesehen sind, Als Drossel kann dabei ein Bereich zwischen der Blasform bzw. deren Innenwand und einer von außerhalb bzw. einer von einer Außenwandung der Blasform ausgehenden Anbohrung dienen.

Vorteilhaft liegen die Öffnungsbereiche in gekrümmten Abschnitten des jeweiligen Blasformteils.

Bei einer weiteren vorteilhaften Ausführungsform liegen die Öffnungsbereiche bzw. die Entlüftungsbereiche (die beispielsweise als Bohrung ausgeführt sein können) außerhalb einer tatsächlichen Kontaktfläche eines befüllten Behältnisses zu einer geometrischen ebenen Fläche, welche senkrecht zur Behältnislängsachse steht. Damit liegen bei dieser Ausführungsform diese Öffnungs- bzw. Entlüftungsbereiche außerhalb beispielsweise einer Standfläche eines derartigen Behältnisses bzw. den die Standfläche ausbildenden Abschnitten des Blasformteils.

Bei einer weiteren vorteilhaften Ausführungsform weist das Blasformteil einen Ausbildungsabschnitt zur Ausbildung einer Standfläche des Behältnisses auf und der Öffnungsbereich ist wenigstens teilweise in diesem Ausbildungsabschnitt angeordnet. Üblicherweise sind diese Ausbildungsabschnitte bei Betrachtung eines aufrechtstehenden Behältnisses die tiefsten Bereiche der jeweiligen Blasform. Eine Entlüftung in diesem Bereich ist daher sehr sinnvoll, da auf diese Weise gerade das Einexpandieren von Materialien in diese Bereiche gefördert werden kann. Unter einer Anordnung des Öffnungsbereiches in diesem Ausbildungsabschnitt wird auch noch verstanden, wenn die Öffnungsbereiche sich in einem Bereich von ± 10 mm, bevorzugt ± 8 mm, bevorzugt ± 5 mm und besonders bevorzugt ± 2 mm an diesen die Standfläche ausbildenden Bereich annähert.

Bei einer weiteren vorteilhaften Ausführungsform sind die Öffnungen auch geeignet, um etwa in einem Reinigungs- oder Sterilisationsbetrieb umgekehrt der Blasform bzw. dem Hohlraum der Blasform ein Reinigungs- und/oder Sterilisationsmittel zuzuführen.

Die vorliegende Erfindung ist weiterhin auf eine Vorrichtung zum Umformen von Kunststoffvorformlingen zu Kunststoffbehältnissen gemäß Anspruch 7 gerichtet, welche wenigstens eine Umformungseinrichtung aufweist, welche wiederum eine Beaufschlagungseinrichtung aufweist, um die Kunststoffvorformlinge mit einem gasförmigen Medium zu beaufschlagen, sowie eine Blasform zum Herstellen von Kunststoffbehältnissen mit wenigstens zwei Blasformteilen, welche einen Hohlraum ausbilden, innerhalb dessen Kunststoffvorformlinge durch Beaufschlagung mit einem fließfähigen Medium zu den Kunststoffbehältnissen umformbar sind. Dabei weist eine den Hohlraum begrenzende Innenwandung der Blasformteile eine Kontur auf, welche eine vorgegebene Gestalt der herzustellenden Behältnisse erzeugt, wobei wenigstens ein

Abschnitt eines Blasformteils einen Boden des Kunststoffbehältnisses erzeugt, wobei in diesem Abschnitt des Blasformteils wenigstens ein Öffnungsbereich vorgesehen ist, welcher ein Abführen eines gasförmigen Mediums während eines Expansionsvorgangs des Behältnisses ermöglicht.

Erfindungsgemäß weist die Vorrichtung eine Unterdruckerzeugungseinrichtung auf, welche wenigstens zeitweise während des Expansionsvorgangs ein gasförmiges Medium aus dem Hohlraum durch den Öffnungsbereich hindurch absaugt.

Es wird daher in diesem Falle vorgeschlagen, dass die Ausbildung der Kunststoffbehältnisse noch zusätzlich dadurch gefördert wird, dass während des Expansionsvorgangs das gasförmige Medium durch den Öffnungsbereich hindurch entlassen und bevorzugt abgesaugt wird. Dadurch kann die Ausprägung des Behältnisses auch bei geringeren Blasdrücken erfolgen.

Bevorzugt weist die Vorrichtung eine Vielzahl derartiger Umformungsstationen auf. Bei einer weiteren vorteilhaften Ausführungsform ist die Blasform, wie oben beschrieben, ausgebildet.

Bevorzugt ist die Absaugung des Mediums wenigstens zeitweise an eine weitere während des Umformungsvorgangs stattfindende Bewegung gekoppelt. Hier wird vorgeschlagen, dass eine weitere Bewegung, welche zur Umformung der Behältnisse verwendet wird, mit der Absaugung gekoppelt ist. Eine derartige Kopplung kann dabei mechanischer Natur sein und/oder steuerungstechnisch erfolgen.

Bevorzugt ist diese Bewegung aus einer Gruppe von Bewegungen ausgewählt, welche eine Reckstangenbewegung, eine Drehung einer Blasrads, an der die Umformungseinrichtung angeordnet ist, eine Bewegung des Bodenteils und dergleichen enthält. So kann beispielsweise festgelegt werden, dass mit einer bestimmten Bewegung der Reckstange auch gleichzeitig eine Absaugung des gasförmigen Mediums beginnt. Auch kann diese Absaugen bei einer bestimmten vorgegebenen Position bzw. Drehstellung der jeweiligen Umformungseinrichtung beginnen. Damit können ohnehin bei der Blasformung stattfindende Vorgänge auch als Auslöser für die Absaugung verwendet werden.

Bevorzugt weist die Vorrichtung daher eine Steuerungseinrichtung auf, welche die besagte Absaugung des gasförmigen Mediums in Abhängigkeit von einem weiteren für den Blasformvorgang charakteristischen Vorgang steuert. So kann beispielsweise zu einem bestimmten Zeitpunkt während des Expansionsvorgangs mit einer Absaugung begonnen werden und bevorzugt diese auch wieder zu einem vorgegebenen Zeitpunkt beendet werden. Auf diese Weise ist eine Energieeinsparung möglich, da nicht kontinuierlich abgesaugt werden muss, sondern nur in vorgegebenen Zeiträumen.

Auch wäre es möglich, dass ein Absaugvolumen während des Expansionsvorgangs verändert wird.

Bei einer weiteren vorteilhaften Ausführungsform weist die Vorrichtung einen bewegbaren und insbesondere einen drehbaren Träger auf, an den eine Vielzahl der besagten Umformungsstationen angeordnet ist.

Bei einer weiteren vorteilhaften Ausführungsform weist die Vorrichtung bzw. weisen die einzelnen Umformungsstationen jeweils stangenartige Körper auf, welche in die Kunststoffbehältnisse einführbar sind, um diese in ihrer Längsrichtung zu dehnen. Dabei handelt es sich bei diesen stangenartigen Körpern bevorzugt um sogenannte Reckstangen.

Bei der Beaufschlagungseinrichtung handelt es sich vorteilhaft um eine Blasdüse, welche an einen Mündungsbereich der Kunststoffvorformlinge ansetzbar ist, um diese zu deren Expansion mit dem gasförmigen Medium und insbesondere mit Blasluft zu beaufschlagen.

Die vorliegende Erfindung ist weiterhin auf ein Bodenteil für eine Blasform zum Herstellen von Kunststoffbehältnissen gerichtet. Dieses Bodenteil weist eine Innenwandung mit einer Kontur auf, welche eine vorgegebene Bodengestalt der herzustellenden Behältnisse (10) erzeugt, wobei in dem Bodenteil eine Vielzahl von voneinander beabstandeten Öffnungsbereichen vorgesehen ist, welche ein Abführen eines gasförmigen Mediums während eines Expansionsvorgangs des Behältnisses ermöglichen.

Erfindungsgemäß sind diese Öffnungsbereiche wenigstens abschnittsweise in einem eine Unterseite des Behältnisses erzeugenden Abschnitt des Bodenteils angeordnet sind und diese Öffnungsbereiche erstrecken sich wenigstens abschnittsweise entlang einer ersten Linie sowie einer zweiten Linie, wobei diese Linien wenigstens abschnittsweise in einem von 0° unterschiedlichen Winkel zueinander verlaufen.

Dabei können diese Offnungsbereiche, wie oben gesagt durch entlang der Linien angeordnete Offnungen. Vorzugsweise sind die Öffnungsbereiche in einem gekrümmten Bereich des Bodenteils angeordnet und in einem Bereich des Bodenteils, der zur Ausbildung eines Standfußes des auszubildenden Behältnisses bestimmt ist.

Die vorliegende Erfindung ist weiterhin auf ein Verfahren zum Umformen von Kunststoffvorformlingen gemäß Anspruch 9, gerichtet, wobei die Kunststoffvorformlinge durch Beaufschlagung mit einem gasförmigen Medium innerhalb eines von einer Blasform ausgebildeten Hohlraums expandiert werden.

Erfindungsgemäß wird wenigstens zeitweise ein gasförmiges Medium aus einem außerhalb des Kunststoffvorformlings liegenden Bereich des Hohlraums der Blasform abgesaugt. Vorteilhaft wird wenigstens zeitweise während des Expansionsvorgangs des Kunststoffvorformlings das gasförmige Medium abgesaugt. Bei diesem Raum handelt es sich um einen Raum, der zwar innerhalb des von der Blasform gebildeten Hohlraums, jedoch außerhalb des Kunststoffvorformlings liegt. Vorteilhaft wird das gasförmige Medium aus einem Bodenbereich der Blasform abgesaugt. Vorteilhaft erfolgt dieses Absaugen des gasförmigen Mediums insbesondere zur Ausbildung von Standbereichen des Kunststoffbehältnisses.

Bei einem vorteilhaften Verfahren wird die Absaugung des Mediums wenigstens zeitweise an eine weitere während des Umformungsvorgangs stattfindende Bewegung gekoppelt. Weitere Vorteile und Ausführungsformen ergeben sich aus den beigefügten Zeichnungen.

Darin zeigen:
- Fig. 1: Eine grob schematische Darstellung einer Vorrichtung zum Umformen von Kunststoffvorformlingen zu Kunststoffbehältnissen;
- Fig. 2: eine Darstellung einer Blasstation mit Blasform zum Umformen von Kunststoffvorformlingen zu Kunststoffbehältnissen;
- Fig. 3: eine Darstellung eines erfindungsgemäßen Bodenteils einer Blasform;
- Fig. 4: eine Darstellung des in Fig. 3 gezeigten Bodenteils von innen;
- Fig. 5: eine Darstellung einer weiteren Ausführungsform eines nicht erfindungsgemäßen Bodenteils einer Blasform;
- Fig. 6: eine Darstellung des nicht erfindungsgemäßen Bodenteils aus Fig. 5 in einer weiteren Ansicht;
- Fig. 7: eine weitere Darstellung eines Bodenteils;
- Fig. 8: eine Ansicht des in Fig. 7 gezeigten Bodenteils;
- Fig. 9, 10: zwei weitere Ansichten eines nicht erfindungsgemäßen
- Fig. 11: eine weitere Ausgestaltung eines erfindungsgemäßen Bodenteils;
- Fig. 12, 13: zwei Darstellungen eines weiteren erfindungsgemäßen Bodenteils;
- Fig. 14 - 16: drei nicht erfindungsgemäßen Bodenteils;
- Fig. 17: eine Ansicht eines nicht erfindungsgemäßen Bodenteils von unten und
- Fig. 18: eine weitere Ansicht einer Ausführungsform eines Bodenteils in einer Ansicht von unten.

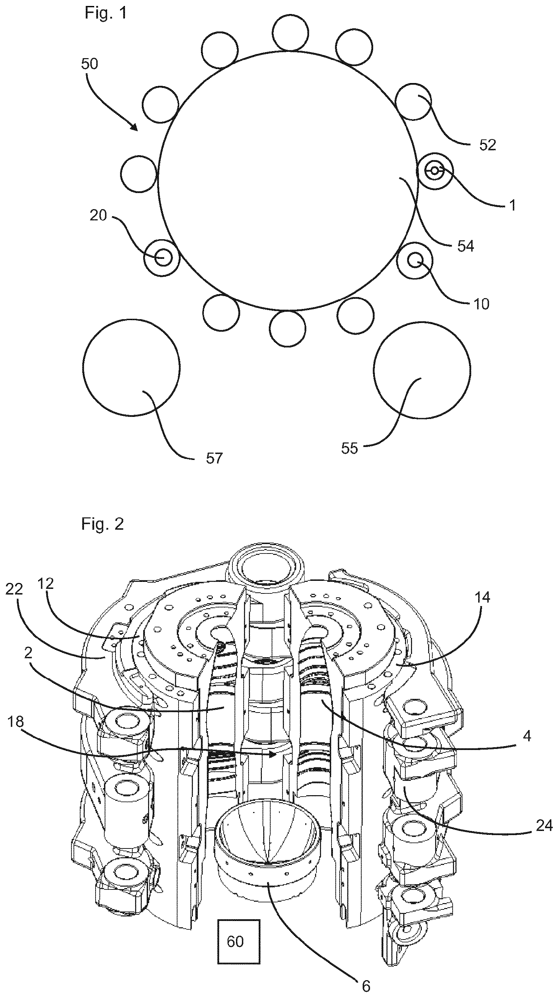

Fig. 1 zeigt eine grob schematische Darstellung einer erfindungsgemäßen Vorrichtung zum Umformen von Kunststoffvorformlingen 10 zu Kunststoffbehältnissen 20. Dabei werden die Kunststoffvorformlinge 10 über eine Zuführeinrichtung 55, wie etwa einem Zuführstern, zugeführt und die fertigen Behältnisse werden der Vorrichtung 50 über eine Abführeinrichtung, wie einen Abführstern 57, entnommen. Die Umformungseinrichtung 50 weist einen drehbaren Träger 54 auf, an den eine Vielzahl von Umformungsstationen 52 angeordnet ist. Dabei weist jede dieser Umformungsstationen 52 jeweils eine Blasform 1 auf.

Fig. 2 zeigt eine schematische Ansicht einer erfindungsgemäßen Blasform. Diese Blasform weist hier zwei Seitenteile 2, 4 auf sowie ein Bodenteil 6 auf. Gemeinsam bilden diese beiden Seitenteile und das Bodenteil 6 einen Hohlraum 18 aus, innerhalb dessen die Kunststoffvorformlinge zu den Kunststoffbehältnissen expandiert werden. Die oben beschriebenen Entlüftungsöffnungen befinden sich dabei insbesondere in dem Bodenteil, sie können jedoch auch in den Seitenteilen vorgesehen sein, beispielsweise, um komplizierte Wölbungen des Kunststoffbehältnisses besser ausbilden zu können. Die Bezugszeichen 12, 14 beziehen sich auf Trägerschalen, welche die Blasformteile 2, 4 tragen und die Bezugszeichen 22, 24 auf Blasformträger, an denen jeweils die Blasformteile (über die Trägerschalen 12, 14) befestigt sind.

Das Bezugszeichen 60 bezieht sich auf eine nur schematisch dargestellte Unterdruckerzeugungseinrichtung. Diese kann dabei so gesteuert sein, dass sie während eines vorgegebenen Zeitraums während der Expansion der Kunststoffvorformlinge Luft aus dem Innenraum der Blasform abzieht.

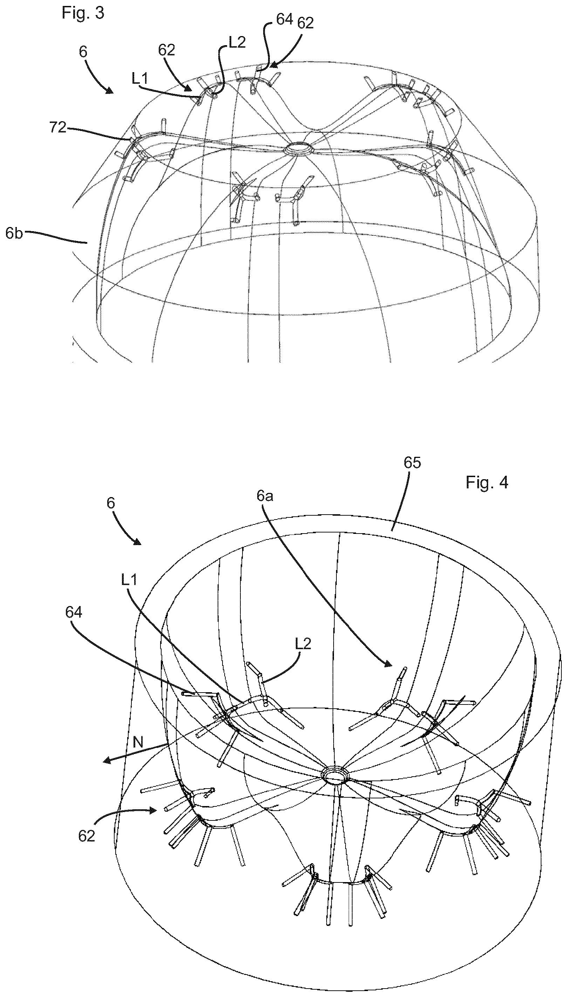

Die folgenden Figuren 3 bis 18 zeigen unterschiedliche Ausgestaltungen von Bodenteilen. Dabei werden zur besseren Übersichtlichkeit nicht jeweils sämtliche Bezugszeichen in den einzelnen Figuren wiederholt.

Fig. 3 zeigt eine Darstellung eines Bodenteils von unten. Man erkennt dabei die Öffnungsbereiche 62, welche hier jeweils einen den Behältnissen zugewandten sich entlang von Linien L1 und L2 erstreckenden Kanal aufweisen sowie Verbindungskanäle 64, welche hin zu Öffnungen 72, welche an der Außenoberfläche 6b des Bodenteils angeordnet sind, leiten. Man erkennt, dass hier jeweils einem auszubildenden Standbein zwei Öffnungsbereiche 62 zugeordnet sind. Weiterhin erkennt man, dass die Öffnungsbereiche sich entlang hier zweier Linien L1 und L2 erstrecken, wobei diese beiden Linien nicht parallel zueinander sind und sich hier auch in einem Kreuzungspunkt schneiden. Durch diese Anordnung kann in besonders günstiger Weise eine Abfuhr bzw. ein Absaugen von gasförmigem Medium erreicht werden.

Fig. 4 zeigt eine weitere Ansicht des in Fig. 3 gezeigten Bodenteils. Man erkennt hier, dass die einzelnen Öffnungsbereiche 62 jeweils in den Bereichen des Bodenteils angeordnet sind, die zur Ausprägung von Standfüßen des herzustellenden Behältnisses dienen. Auch erkennt man, dass die einzelnen Verbindungskanäle, welche sich durch die Wandung 65 des Bodenteils hindurch erstrecken, jeweils in Richtung einer Flächennormalen N verlaufen, welche senkrecht zu der Innenwandung des Bodenteils 6 steht. Auf diese Weise kann auf Verwinklungen bei der Abführung von Blasluft oder von Luft verzichtet werden.

Wenn aufgrund der Position der Öffnung 72 (vgl. Fig. 3) die Richtung der Flächennormalen N nicht möglich ist (für den Werkzeuganstellwinkel), kann die Richtung der Flächennormale durch eine Achse in Richtung des Anstellwinkels zwischen 0° bis 90° ersetzt werden. Der Winkel 0° entspricht der vertikalen Achse aus dem Zentrum Z.

Das Bezugszeichen 6a bezieht sich auf den Abschnitt des Bodenbereichs 6, in dem die besagten Öffnungen bzw. Öffnungsbereiche angeordnet sind. Dieser Abschnitt dient bevorzugt zur Ausbildung von Standfüßen des zu fertigenden Behältnisses.

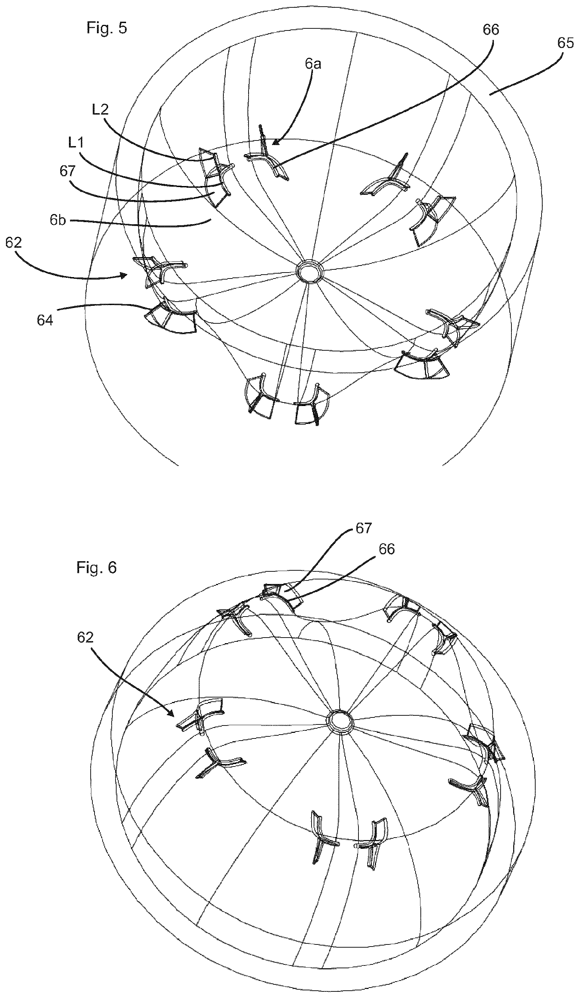

Fig. 5 zeigt eine weitere Ausgestaltung eines Bodenteils 6. Auch hier sind wiederum an der dem Kunststoffvorformling zugewandten Oberfläche Kanäle 66 vorgesehen, diese sind jedoch hier als durchgehende Schlitze 67 ausgebildet, welche sich durch die Wandung 65 des Bodenteils hindurch erstrecken. Durch diese Schlitze kann wiederum Luft abgeführt werden. Auch erstrecken sich jedoch die an der Innenwandung ausgebildeten Kanäle bzw. diese Schlitze in zwei unterschiedlichen Richtungen L1 und L2.

Fig. 6 zeigt eine weitere Darstellung des in Fig. 5 gezeigten Bodenteils. Auch hier sind wieder die Kanäle 66 sowie die Schlitze 67 erkennbar.

Bei den hier konkret gezeigten Ausführungsformen sind insgesamt zehn Öffnungsbereiche 62 vorgesehen, wobei jeweils zwei Öffnungsbereiche 62 einem auszubildenden Standfuß des zu erzeugenden Behältnisses zugeordnet sind.

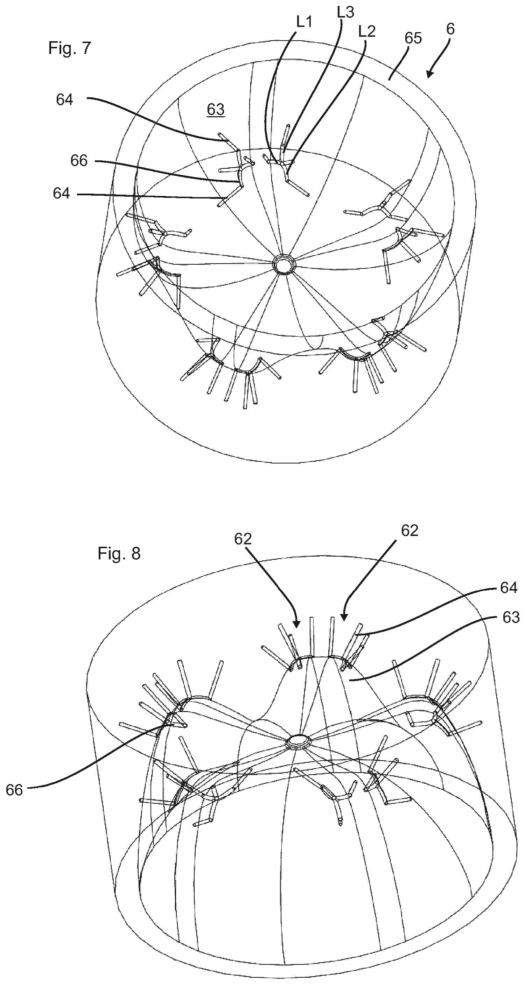

Die Fig. 7 und 8 zeigen eine weitere Ausgestaltung eines Bodenteils. Auch hier sind wieder an der Innenwandung der Blasform Kanäle 66 vorgesehen sowie Verbindungskanäle 64, welche sich durch die Wandung 65 des Bodenteils hindurch erstrecken. Bei dieser Ausführungsform sind die Öffnungsbereiche 62 jeweils krähenfußartig ausgebildet und weisen daher ebenfalls wieder zwei nicht zueinander parallele L1 und L2 auf. Daneben können jedoch auch weitere Linien, wie L3, vorgesehen sein, welche ebenfalls nicht parallel zu den beiden anderen Linien verlaufen. Die in Fig. 7 gezeigte Darstellung bzw. ein entsprechendes Bodenteil eignet sich ebenfalls in besonders günstiger Weise zum Abführen bzw. Absaugen von Luft aus denjenigen Bereichen, welche später die Standfüße erzeugen sollen.

Fig. 8 zeigt eine weitere Darstellung, aus der wieder deutlich hervorgeht, dass die Öffnungsbereiche 62 in denjenigen Abschnitten 63 des Bodenteils angeordnet sind, welche zur Erzeugung der Standfüße dienen.

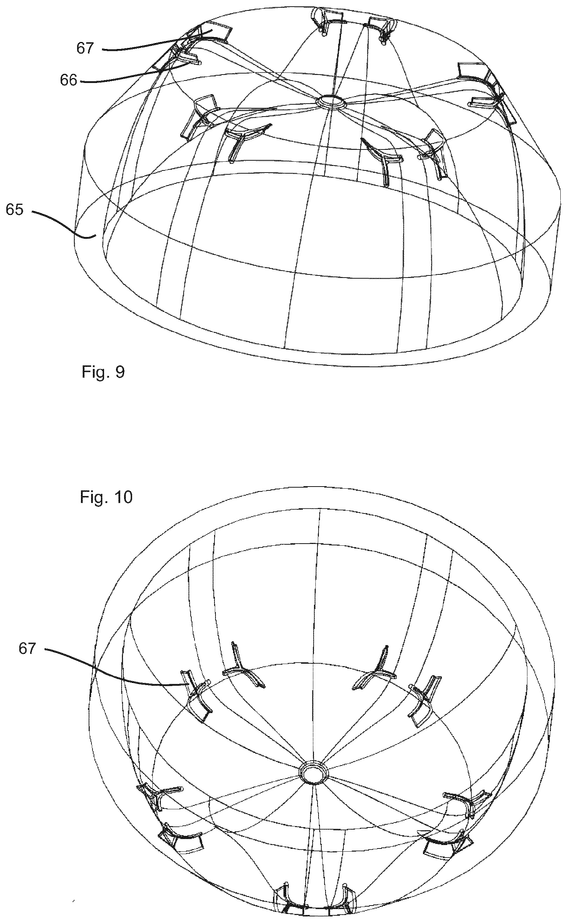

Die Fig. 9 und 10 zeigen eine weitere Ausgestaltung eines Bodenteils 6. Auch hier sind die Kanäle an der Innenwandung des Bodenteils krähenfußartig ausgebildet, es schließen sich jedoch auch hier wiederum keine einzelnen Kanäle an, sondern Öffnungsschlitze, welche durch die Wandung 65 des Bodenteils hindurch ragen. Auf der Innenseite des Bodenteils passen sich bevorzugt die Schlitze bzw. die Öffnungen an die Kontur des auszuprägenden Behältnisses an.

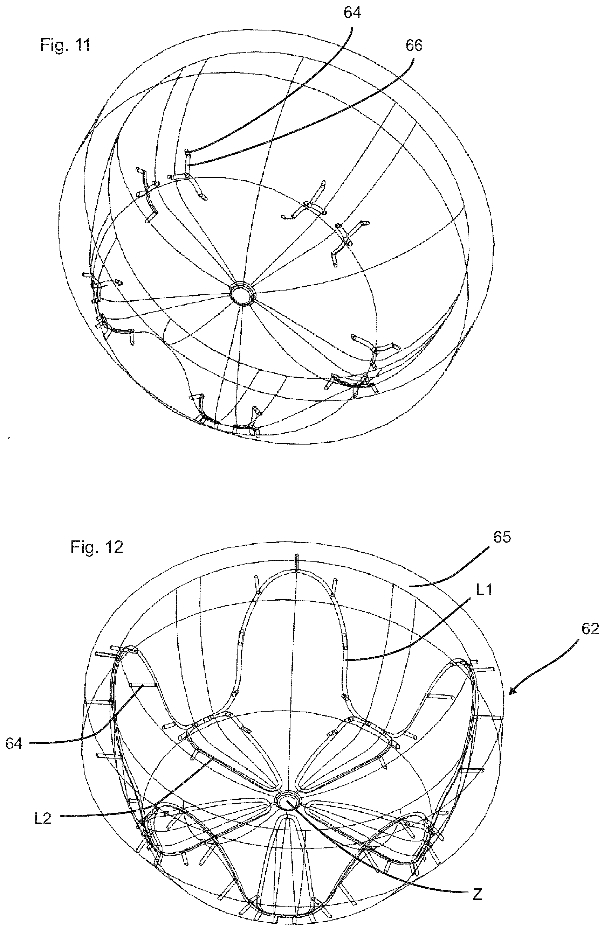

Fig. 11 zeigt wiederum eine Darstellung mit Kanälen 66 und sich daran anschließenden Verbindungsleitungen 64. Es wird jedoch darauf hingewiesen, dass der Aufbau auch umgekehrt sein könnte, nämlich eine Vielzahl von Öffnungen, die an der Innenwandung des Bodenteils angeordnet sind und jeweils Kanäle aufweisen, die zur Außenwand des Bodenteils führen. In diesem Falle würden jedoch auch, wie oben erwähnt, die besagten Öffnungen entlang der jeweiligen Linien L1 und L2 angeordnet sein.

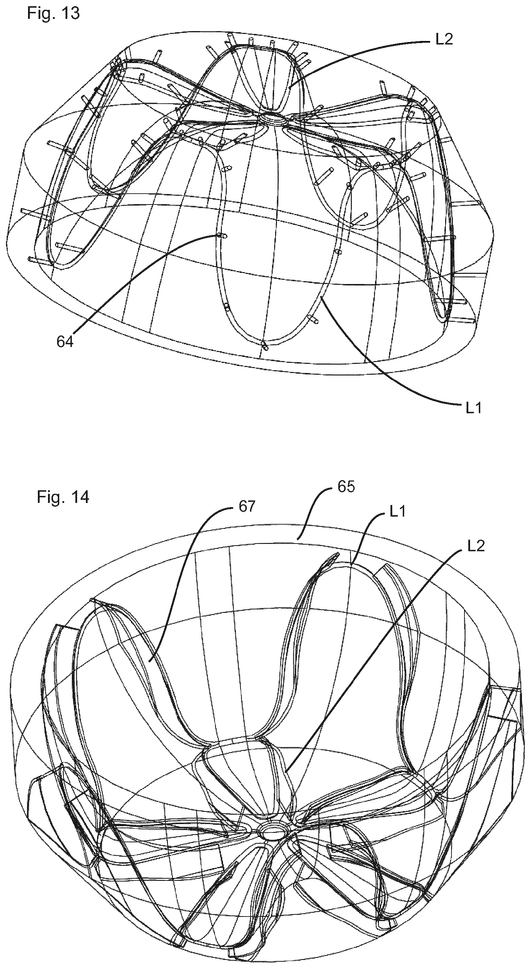

Die Fig. 12 und 13 zeigen eine weitere Ausgestaltung. Man erkennt, dass hier eine erste Linie L1 vorgesehen ist, welche sich wellenartig um das Bodenteil 6 herum erstreckt. Die zweite Linie L2 ist hier eine geschlossene Linie, durch welche direkt am Boden angeordnet ist, und welche auf einen Zentralbereich Z des Bodenteils 6 zu verläuft. Auch hier ist wiederum eine Vielzahl von Verbindungskanälen 64 vorgesehen, welche durch die Wandung 65 des Bodenteils 6 verlaufen.

Fig. 13 zeigt eine weitere Darstellung des in Fig. 12 gezeigten Bodenteils. Auch hier sind wieder die beiden Linien L1 und L2 erkennbar sowie auch die Verbindungskanäle 64.

Fig. 14 zeigt eine weitere Ausgestaltung eines nicht erfindungsgemäßen Bodenteils. Auch hier sind die beiden Linien L1 und L2 erkennbar, es sind jedoch hier wiederum nicht Verbindungskanäle 64 vorgesehen, sondern die Verbindung nach außen ist wiederum als Schlitz 67 in der Wandung 65 des Bodenteils ausgebildet.

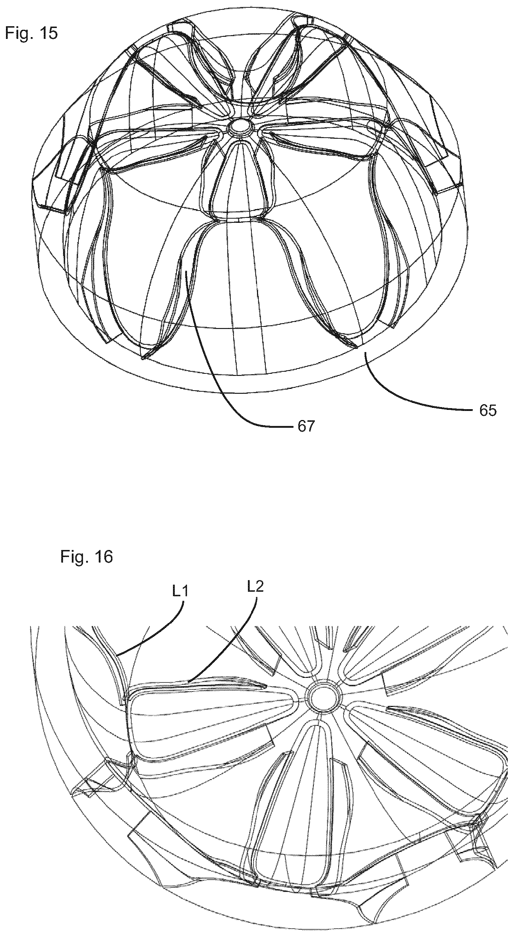

Fig. 15 zeigt eine weitere Darstellung des in Fig. 14 gezeigten Bodenteils. Man erkennt hier wiederum die beiden Linien L1 und L2 sowie die Schlitze 67, welche durch die Wandung 65 des Bodenteils verlaufen.

Fig. 16 zeigt eine weitere Darstellung des in den Fig. 15 und 14 gezeigten Bodenteils, wobei hier wiederum diejenigen Bereiche erkennbar sind, welche die jeweiligen Linien L1 und L2 bilden.

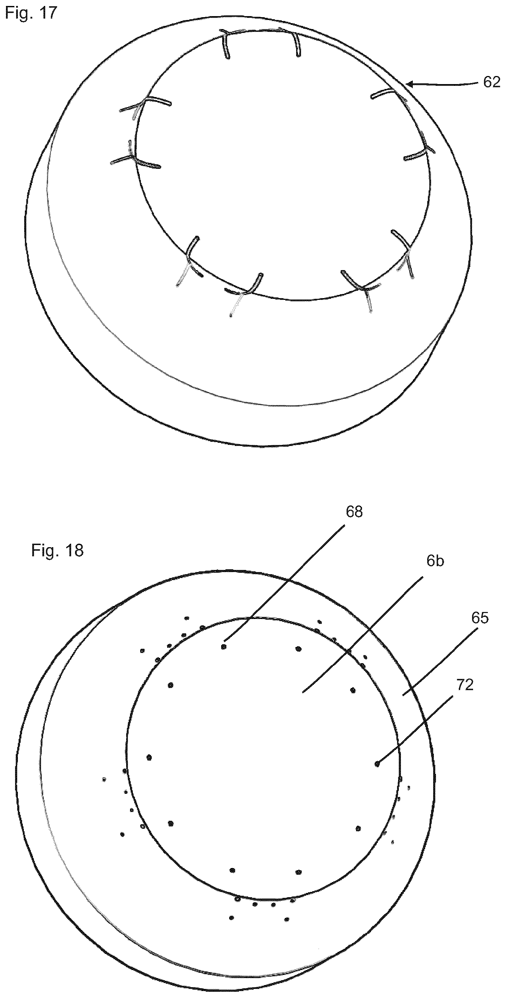

Fig. 17 zeigt eine Ansicht eines Bodenteils von unten, wobei hier wieder die Öffnungsbereiche dargestellt sind. In diesem Falle sind dem Bodenteil jeweils Schlitze in der Wand 65 angeordnet.

Bei der in Fig. 18 gezeigten Ausgestaltung sind keine Schlitze in der Wandung 65 vorgesehen, sondern die in einigen der vorangegangenen Figuren dargestellten Kanäle 64, die jeweils zu den Öffnungen 72 führen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Blasform
- 2, 4: Seitenteile
- 5: Wandung
- 6: Bodenteil
- 6a: Abschnitt
- 6b: Außenoberfläche
- 10: Kunststoffvorformlinge
- 12, 14: Trägerschalen
- 18: Hohlraum
- 20: Kunststoffbehältnisse
- 22, 24: Blasformträger
- 50: Umformungseinrichtung
- 52: Umformungsstationen
- 54: drehbarer Träger
- 55: Zuführeinrichtung
- 57: Abführstern
- 62: Öffnungsbereiche
- 64: Verbindungskanäle
- 65: Wandung
- 66: Kanäle
- 67: Schlitze
- 72: Öffnungen

- L1, L2: Linien
- L3: weitere Linie
- N: Flächennormalen
- Z: Zentralbereich

## Patentansprüche

1. Blasform (1) zum Herstellen von Kunststoffbehältnissen (20) mit wenigstens zwei Blasformteilen (2, 4, 6), welche einen Hohlraum (18) ausbilden, innerhalb dessen Kunststoffvorformlinge (10) durch Beaufschlagung mit einem fließfähigen Medium zu den Kunststoffbehältnisse (20) umformbar sind, wobei eine den Hohlraum (18) begrenzende Innenwandung der Blasformteile (2, 4, 6) eine Kontur aufweist, welche eine vorgegebene Gestalt der herzustellenden Behältnisse (10) erzeugt, wobei wenigstens ein Abschnitt eines Blasformteils (6) einen Boden des Kunststoffbehältnisses erzeugt, wobei in einem Abschnitt eines Blasformteils (2, 4, 6) wenigstens ein Öffnungsbereich (62) vorgesehen ist, welcher ein Abführen eines gasförmigen Mediums während eines Expansionsvorgangs des Behältnisses ermöglicht wobei dieser Öffnungsbereich (62) sich wenigstens abschnittsweise entlang einer ersten Linie (L1) sowie einer zweiten Linie (L2) erstreckt, wobei diese Linien wenigstens abschnittsweise in einem von 0° unterschiedlichen Winkel zueinander verlaufen, **dadurch gekennzeichnet, dass** wobei in dem Öffnungsbereich (62) eine Vielzahl von Löchern angeordnet ist, wobei diese Löcher entlang wenigstens einer der beiden Linien (L1, L2) angeordnet sind und entlang jeder Linie wenigstens drei Löcher angeordnet sind und wobei der Öffnungsbereich (62) in einem Bereich eines Bodenteils (6) der Blasform (1) angeordnet ist, der zur Erzeugung eines Standfußes des Behältnisses (20) dient und wenigstens ein Loch einen Durchmesser aufweist, der zwischen 0,5 mm und 4 mm, bevorzugt zwischen 0,5 mm und 2 mm liegt.

2. Blasform (1) nach Anspruch 1, **dadurch gekennzeichnet, dass**
ein Abstand zwischen zwei entlang einer der Linien (L1, L2) nebeneinander angeordneten Löchern kleiner ist als 2mm.

3. Blasform nach zumindest einem der vorhergehenden Ansprüche, **dadurch gekennzeichnet, dass**
sich an die Öffnungsbereiche (62) innerhalb einer Wandung der Blasformteile Kanäle (64) anschließen, welche zur Abführung des gasförmigen Mediums dienen.

4. Blasform (1) nach Anspruch 3, **dadurch gekennzeichnet, dass**
sich die Kanäle (64) wenigstens abschnittsweise entlang einer zu der Kontur gebildeten Flächennormalen erstrecken.

5. Blasform nach zumindest einem der vorhergehenden Ansprüche, **dadurch gekennzeichnet, dass**
das Blasformteil (6) einen Ausbildungsabschnitt (66) zur Ausbildung einer Standfläche des Behältnisses (20) aufweist und der Öffnungsbereich wenigstens teilweise in diesem Ausbildungsabschnitt (66) angeordnet ist.

6. Vorrichtung (50) zum Umformen von Kunststoffvorformlingen (10) zu Kunststoffbehältnissen (20) mit wenigstens einer Umformungseinrichtung, welche eine Beaufschlagungseinrichtung aufweist, um die Kunststoffvorformlinge mit einem gasförmigen Medium zu beaufschlagen, sowie eine Blasform (1), gemäß zumindest einem der vorhergehenden Ansprüche, zum Herstellen von Kunststoffbehältnissen (20) mit wenigstens zwei Blasformteilen (2, 4, 6), welche einen Hohlraum (12) ausbilden, innerhalb dessen Kunststoffvorformlinge (10) durch Beaufschlagung mit einem fließfähigen Medium zu den Kunststoffbehältnisse (20) umformbar sind, wobei eine den Hohlraum (18) begrenzende Innenwandung der Blasformteile (2, 4, 6) eine Kontur aufweist, welche eine vorgegebene Gestalt der herzustellenden Behältnisse (10) erzeugt, wobei wenigstens ein Abschnitt eines Blasformteils (6) einen Boden des Kunststoffbehältnisses (10) erzeugt, wobei in einem Abschnitt (6a) eines Blasformteils (2, 4, 6) wenigstens ein Öffnungsbereich (62) vorgesehen ist, welche ein Abführen eines gasförmigen Mediums während eines Expansionsvorgangs des Behältnisses ermöglicht, wobei die Vorrichtung (50) eine Unterdruckerzeugungseinrichtung (60) aufweist, welche wenigstens zeitweise während des Expansionsvorgangs ein gasförmiges Medium aus dem Hohlraum (12) durch den Öffnungsbereich hindurch absaugt.

7. Vorrichtung (50) nach Anspruch 6, **dadurch gekennzeichnet, dass**
die Absaugung des Mediums wenigstens zeitweise an eine weitere während des Umformungsvorgangs stattfindende Bewegung gekoppelt ist.

8. Bodenteil (6) für eine Blasform (1) zum Herstellen von Kunststoffbehältnissen (20) wobei das Bodenteil eine Innenwandung mit einer Kontur aufweist, welche eine vorgegebene Bodengestalt der herzustellenden Behältnisse (10) erzeugt, wobei in dem Bodenteil (6) eine Vielzahl von voneinander zumindest teilweise beabstandeten Öffnungsbereichen (62) vorgesehen ist, welche ein Abführen eines gasförmigen Mediums während eines Expansionsvorgangs des Behältnisses ermöglichen wobei diese Öffnungsbereiche (62) wenigstens abschnittsweise in einem eine Unterseite des Behältnisses (10) erzeugenden Abschnitt des Bodenteils (6) angeordnet sind und diese Öffnungsbereiche (62) sich wenigstens abschnittsweise entlang einer ersten Linie (L1) sowie einer zweiten Linie (L2) erstrecken, wobei diese Linien (L1, L2) wenigstens abschnittsweise in einem von 0° unterschiedlichen Winkel zueinander verlaufen, **dadurch gekennzeichnet, dass** in dem Öffnungsbereich (62) eine Vielzahl von Löchern angeordnet ist, wobei diese Löcher entlang wenigstens einer der beiden Linien (L1, L2) angeordnet sind und entlang jeder Linie wenigstens drei Löcher angeordnet sind und wenigstens ein Loch einen Durchmesser aufweist, der zwischen 0,5 mm und 4 mm, bevorzugt zwischen 0,5 mm und 2 mm liegt.

9. Verfahren zum Umformen von Kunststoffvorformlingen, wobei die Kunststoffvorformlinge (10) durch Beaufschlagung mit einem gasförmigen Medium innerhalb eines von einer Blasform, gemäß zumindest einem der vorhergehenden Ansprüche 1 bis 5, ausgebildeten Hohlraums expandiert werden, wobei wenigstens zeitweise ein gasförmiges Medium aus einem außerhalb des Kunststoffvorformlings liegenden Bereich des Hohlraums abgesaugt wird

10. Verfahren nach Anspruch 9, **dadurch gekennzeichnet, dass**
die Absaugung des Mediums wenigstens zeitweise an eine weitere während des Umformungsvorgangs stattfindende Bewegung gekoppelt wird.

## Claims

1. Blow mould (1) for producing plastic containers (20) with at least two blow mould parts (2, 4, 6) which form a hollow space (18) inside which plastic parisons (10) can be transformed by the application of a flowable medium to the plastic containers (20), wherein an inner wall of the blow mould parts (2, 4, 6) delimiting the hollow space (18) has a contour which produces a predetermined configuration of the plastic containers (20) to be produced, wherein at least one portion of a blow mould part (6) produces a bottom of the plastic container, wherein in a portion of a blow mould part (2, 4, 6) at least one opening region (62) is provided which enables discharge of a gaseous medium during an expansion process of the plastic containers, wherein this opening region (62) extends at least in sections along a first line (L1) as well as a second line (L2), wherein these lines run at least in some sections at an angle different from 0° relative to one another,
**characterized in that**
wherein in the opening region (62) a plurality of holes is arranged, wherein these holes are arranged along at lest one of the two lines (L1, L2) and along each line at least three holes are arranged and wherein the opening region is arranged in a region of a bottom part of the blow mould (1) which serves to produce a supporting foot of the container (20) and at least one hole has a diameter which is betwenn 0,5 mm and 4 mm, preferably between 0,5 mm and 2 mm.

2. Blow mould (1) according to claim 1,
**characterized in that**
a distance between two holes arranged next to each other along one of the lines (L1, L2) is smaller than 2 mm.

3. Blow mould (1) according to at least one of the preceding claims,
**characterized in that**
channels (64) which serve to discharge the gaseous medium adjoin the opening regions (62) within a wall of the blow mould parts.

4. Blow mould (1) according to claim 3,
**characterized in that**
the channels (64) extend at least in some sections along a surface normal to the contour.

5. Blow mould according to at least one of the preceding claims,
**characterized in that**
the blow mould part (6) has a forming portion (66) for forming a standing surface of the containers (20) and the opening region is arragned at least partly in the forming portion (66).

6. Apparatus (50) for forming plastic preforms (10) into plastic containers (20) with at least one forming device which has an application device in order to apply a gaseous medium to the plastic preforms, as well as a blow mould (1) according to at lest one of the preceding claims for producing plastic containers (20) with at least two blow mould parts (2, 4, 6) which form a hollow space (12) inside which plastic preforms (10) can be formed by the application of a flowable medium to the plastic containers (20), wherein an inner wall of the blow mould parts (2, 4, 6) delimiting the hollow space (18) has a contour which produces a predetermined configuration of the plastic containers (20) to be produced, wherein at least one portion of a blow mould part (6) produces a bottom of the plastic container (20), wherein in a portion (6a) of a blow mould part (2, 4, 6) at least one opening region (62) is provided which enables discharge of a gaseous medium during an expansion process of the container, wherein the apparatus (50) has a vacuum generating device (60) which at least intermittently during the expansion process extracts a gaseous medium from the hollow space (12) through the opening region.

7. Apparatus (50) according to claim 6,
**characterized in that**
the extraction of the medium is coupled at least intermittently to a further movement which takes place during the forming process.

8. Bottom part (6) for a blow mould (1) for producing plastic containers (20), wherein the bottom part has an inner wall with a contour which produces a predetermined bottom configuration of the plastic containers (10) to be produced, wherein in the bottom part (6) a plurality of opening regions (62) are provided which are spaced at least partially apart from one another and enable discharge of a gaseous medium during an expansion process of the plastic container, wherein these opening regions (62) are arranged at least in some portions in a portion of the bottom part (6) which forms an underside of the plastic container (10) and this opening regions (62) extend at least in some sections along a first line (L1) as well as along a second line (L2), wherein these lines (L1, L2) run at least in some sections at an angle different from 0° relative to one another,
**characterized in that**
in the opening region (62) a plurality of holes is arranged, wherein these holes are arranged along at lest one of the two lines (L1, L2) and along each line at least three holes are arranged and at least one hole has a diameter which is between 0,5 mm and 4 mm, preferably between 0,5 mm and 2 mm.

9. Method for forming plastic prefroms, wherein the plastic preforms (10) are expanded by application of a gaseous medium within a hollow space formed inside a blow mould according to at least one of the preceding claims 1 to 5, wherein a gaseous medium is extracted at least intermittently from a region of the hollow space outside the plastic preform.

10. Method according to claim 9,
**characterized in that**
the extraction of the medium is coupled at least intermittently to a further movement which takes place during the forming process.

## Revendications

1. Moule de soufflage (1) pour la fabrication de contenants en matière plastique (20) avec au moins deux parties de moule de soufflage (2, 4, 6), lesquelles réalisent une cavité (18) à l'intérieur de laquelle des préformes en matière plastique (10) peuvent être transformées en contenants en matière plastique (20) par sollicitation avec un milieu coulant, dans lequel une paroi intérieure, délimitant la cavité (18), des parties de moule de soufflage (2, 4, 6), présente un contour, lequel produit une forme prédéfinie des contenants en matière plastique (10) à fabriquer, dans lequel au moins une section d'une partie de moule de soufflage (6) produit un fond du contenant en matière plastique, dans lequel au moins une zone d'ouverture (62), laquelle permet une évacuation d'un milieu gazeux pendant un processus d'expansion du contenant en matière plastique, est prévue dans une section d'une partie de moule de soufflage (2, 4, 6), dans lequel cette zone d'ouverture (62) s'étend au moins sur certaines sections le long d'une première ligne (L1) ainsi que d'une deuxième ligne (L2), dans lequel ces lignes s'étendent au moins sur certaines sections selon un angle différent de 0°,
**caractérisé en ce que**
dans lequel dans la zone d'ouverture (62) une pluralité de perforations est disposée dans lequel ces perforations sont disposées le long d'au moins une des deux lignes (L1, L2) et le long de chaque ligne sont disposés au moins trois perforations et dans lequel la zone d'ouverture (62) est disposée dans une zone d'une partie de fond (6) du moule de soufflage (1) qui sert à produire un socle du contenant en matière plastique (20) et au moins une perforation présente un diamètre compris entre 0,5 mm et 4 mm, de manière préférée entre 0,5 mm et 2 mm.

2. Moule de soufflage (1) selon la revendication 1,
**caractérisé en ce que**
une distance entre deux perforations disposés l'une à côté de l'autre le long des ligne (L1, L2) est plus petite que 2 mm.

3. Moule de soufflage selon au moins l'une des revendications précédentes,
**caractérisé en ce que**
des canaux (64), lesquels servent à évacuer le milieu gazeux, se raccordent aux zones d'ouvertures (62) à l'intérieur d'une paroi des parties de moule de soufflage.

4. Moule de soufflage (1) selon la revendication 3,
**caractérisé en ce que**
les canaux (64) s'étendent au moins sur certaines sections le long d'une normale à la surface formée par rapport au contour.

5. Moule de soufflage selon au moins l'une des revendications précédentes,
**caractérisé en ce que**
l'élément de moulage par soufflage (6) présente une section de formation (66) pour former une surface de support du récipient (20) et la zone d'ouverture est disposée au moins partiellement dans cette section de formation (66).

6. Dispositif (50) pour la transformation de préformes en matière plastique (10) en contenants en matière plastique (20) avec au moins un système de transformation, lequel présente un système de sollicitation, afin de solliciter les préformes en matière plastique avec un milieu gazeux, ainsi qu'un moule de soufflage (1) selon au moins l'une des revendications précédentes pour la fabrication de contenants en matière plastique (20) avec au moins deux parties de moule de soufflage (2, 4, 6), lesquelles réalisent une cavité (12) à l'intérieur de laquelle des préformes en matière plastique (10) peuvent être transformées en contenants en matière plastique (20) par sollicitation avec un milieu coulant, dans lequel une paroi intérieure, délimitant la cavité (18) des parties de moule de soufflage (2, 4, 6), présente un contour, lequel produit une forme prédéfinie des contenants en matière plastique (10) à fabriquer, dans lequel au moins une section d'une partie de moule de soufflage (6) produit un fond du contenant en matière plastique (10), dans lequel au moins une zone d'ouverture (62), laquelle permet une évacuation d'un milieu gazeux pendant un processus d'expansion du contenant en matière plastique, est prévue dans une section (6a) d'une partie de moule de soufflage (2, 4, 6), et dans lequel le dispositif (50) présente un système de génération de vide (60), lequel aspire un milieu gazeux de la cavité (12) à travers la zone d'ouverture au moins par intermittence pendant le processus d'expansion.

7. Dispositif (50) selon la revendication 6,
**caractérisé en ce que**
l'aspiration du milieu est couplée au moins par intermittence à un autre mouvement ayant lieu pendant le processus de transformation.

8. Partie de fond (6) pour un moule de soufflage (1) destiné à fabriquer des contenants en matière plastique (20), dans laquelle la partie de fond présente une paroi intérieure avec un contour, lequel produit une forme de fond prédéfinie des contenants en matière plastique (10) à fabriquer, dans laquelle une pluralité de zones d'ouverture (62) au moins en partie espacées les unes des autres est prévue dans la partie de fond (6), laquelle permet une évacuation d'un milieu gazeux pendant un processus d'expansion du contenant en matière plastique , dans laquelle les zones d'ouvertures (62) sont disposées au moins sur certaines sections dans une section de la partie de fond (6) produisant une face inférieure du contenant en matière plastique (10) et ces zones d'ouverture (62) s'étendent au moins sur certaines sections le long d'une première ligne (L1) ainsi que d'une deuxième ligne (L2), dans laquelle ces lignes (L1, L2) s'étendent au moins sur certaines sections selon un angle différent de 0°,
**caractérisée en ce que**
une pluralité des perforations est arrangée dans la zone d'ouverture (62), dans laquelle ces perforations sont arrangées le long d'au moins une des deux lignes (L1, L2) et le long de chaque ligne sont arrangées au moins trois perforations et au moins une perforation présente un diamètre qui est compris entre 0,5 mm et 4 mm, de manière préférée entre 0,5 mm et 2 mm.

9. Procédé de transformation de préformes en matière plastique, dans lequel les préformes en matière plastique (10) sont élargies par sollicitation avec un milieu gazeux à l'intérieur d'une cavité réalisée par un moule de soufflage selon au moins l'une des revendications précédentes 1 à 5 , dans lequel un milieu gazeux est aspiré d'une zone de la cavité située à l'extérieur de la préforme en matière plastique au moins par intermittence.

10. Procédé selon la revendication 9,
**caractérisé en ce que**
l'aspiration du milieu est couplée au moins par intermittence à un autre mouvement ayant lieu pendant le processus de transformation.
